# EUROPEAN PATENT APPLICATION

(11) **EP 2 770 301 A1**
(43) Date of publication of application: **27.08.2014**
(21) Application number: 13156025.2
(22) Date of filing: 20.02.2013
(51) Int. Cl.: G01C 21/36

(54) **Personalized 3d vehicle model in an electronic map**

(71) Applicant: Harman Becker Automotive Systems GmbH, 76307 Karlsbad (DE)
(72) Inventor: Hansen, Lars, 85748 Garching bei München (DE)
(74) Representative: Bertsch, Florian Oliver

(57) **Abstract**

A navigation system in a vehicle which comprises an interface, which is configured to receive a three-dimensional(3d) vehicle model (2), a positioning unit, which is configured to determine a current position and a current direction of travel (A) of said vehicle, a graphical processor, which is configured to calculate an electronic map (3) containing the 3d vehicle model (2), wherein the 3d vehicle model (2) is positioned in the electronic map (3) at the current position such that a front side (2a) of the 3d vehicle model (2) is orientated based on the current direction of travel (A), and a display, which is configured to display the electronic map (3) containing the 3d vehicle model (2).

## Description

The invention relates to a navigation system and method for displaying a 3d vehicle model in an electronic map.

### Background

In recent years the usage of electronic maps in vehicle navigation systems has been proliferating. Electronic maps of modern vehicle navigation systems provide information far beyond mere depiction of geographical information. The map is typically enriched with many features, such as indication of points of interests, the indication of the current position, traffic conditions, etc. Moreover, electronic maps are often displayed in a three-dimensional (3d) perspective view. Topography of the environment can also be included. Such 3d electronic maps typically display a large amount of information to the user which is difficult to perceive and relate if the user has also further tasks to perform such as driving.

Then, because of the large amount of information depicted in an electronic map, a user might get distracted if he is unfamiliar with the information.

### Summary

Therefore, a need exists to provide an electronic map which can be personalized by the user in order to allow the user to intuitively perceive the depicted information.

This need is met by the features of the independent claims. The dependent claims describe embodiments.

According to an aspect, a navigation system in a vehicle is provided. The navigation system comprises an interface which is configured to receive a three-dimensional (3d) vehicle model. Moreover, the navigation system comprises a positioning unit which is configured to determine a current position and a current direction of travel of said vehicle. The navigation system also comprises a graphical processor which is configured to calculate an electronic map containing the 3d vehicle model, wherein the 3d vehicle model is positioned in the electronic map at the current position such that a front side of the 3d vehicle model is orientated based on the current direction of travel. Moreover, the navigation system comprises a display which is configured to display the electronic map containing the 3d vehicle model.

In this context the interface may be provided in the form of a "universal serial bus" (USB) or a wireless connection such as one according to the IEEE082.11 standard. The positioning unit may be in the form of a global positioning system (GSP) or a wheel sensor which allows for determination of the current position and the current direction of travel of the vehicle.

Such a navigation system has the advantage that, via the interface, a user may from time to time specify a new 3d vehicle model to be depicted within the electronic map. For example, the 3d vehicle model provided by a user via the interface may relate to the vehicle itself. For example, the 3d vehicle model may be obtained by the user via some image data, for example in the form of photographies, and then may be processed, for example by a computer program, in order to obtain the 3d vehicle model. The 3d vehicle model may then be provided via the interface to the navigation system.

By providing a user-defined vehicle model, the potential for distraction of the user may be decreased. This is because the user is familiar with the 3d vehicle model displayed in the electronic map and therefore intuitively perceives and understands the information depicted in the electronic map.

For example, the electronic map may be displayed in a two-dimensional (2d) view. Then the graphical processor may be configured to calculate the electronic map such that the 3d model of the vehicle is displayed on the display in bird's eye view. Here, the 2d view of the electronic map may relate to a depiction of the map from a viewing angle which is orientated above and parallel to a normal to the plane defined by the electronic map. Then, the 3d model of the vehicle may be displayed in form of a bird's eye view relating to a view from directly above the vehicle model.

When displaying the electronic map in a 2d view, the graphical processor may also be configured to calculate the electronic map such that the 3d vehicle model is displayed on the display in a side view. The side view may relate to a view to the long sides (front to rear) of the vehicle or a view orientated towards the front or rear sides of the vehicle. Depending on the type of two-dimensional view of an electronic map, it may be more suitable to depict the vehicle in such a 2d view relating to a side view.

The electronic map may also be displayed in a three-dimensional view. Then the graphical processor may be configured to calculate the electronic map such that the 3d vehicle model and the electronic map are displayed on the display using the same viewing angle. Typically, the calculation of a 3d view of an electronic map comprises the determination of a viewing angle. The viewing angle defines the line of sight towards the 3d view of the electronic map. For example, the viewing angle may be elevated with respect to the plane defined by the geography data. Then, the viewing angle may also be rotated with respect to the direction of travel of the vehicle. However, it is also possible that the viewing angle encloses a finite angle with respect to the direction of travel of the vehicle. Then the 3d vehicle model is depicted from, e.g., a different direction, e.g. from the front or a side.

In any case, in order to match the perspective of the electronic map with the perspective of the 3d vehicle model, the viewing angle of both the 3d electronic map and the vehicle model may be matched. Then the vehicle model blends into the environment provided by the 3d electronic map. This allows a user to understand the electronic map containing the 3d vehicle model.

As set forth above, using a 3d vehicle model allows great flexibility in the depiction of the electronic map, both in terms of 3d and 2d depiction. The viewing angle can be flexibly adapted. Moreover, when using a personalized 3d vehicle model to indicate the current position, the user can intuitively understand such an indication of the current position in the electronic map.

Therefore, the interface may be configured to receive the 3d vehicle model from a user input based on personalized image data. To this respect the personalized image data may comprise two-dimensional photographies of the vehicle taken from different viewing perspectives selected from the group comprising: front view, side view, rear view, top view.

For example, the user may take images of a vehicle using a conventional camera or a camera provided within a personal computer from all sides. This means that the viewing perspectives of the photographies may include all four sides of the horizontal plane and, for example, one viewing perspective relates to a picture taken from above the object. The pictures may be transferred to a personal computer, if necessary. There a respective computer executable program may calculate a 3d model based on the image data in the form of the photographies. The user may modify manually the image data. Moreover, the user may specify which side relates to a front side of the object. A 3d model of the object, for example a vehicle, may be created and may be transferred via the interface to the navigation system. The interface may be in the form of a USB interface.

Then, the 3d model used for displaying in the electronic map may be used to depict the current position of the vehicle. In particular, the model may be arranged such that the front side always is orientated in the current direction of travel.

According to another aspect, a method for displaying a 3d vehicle model in an electronic map is provided, wherein the method comprises: receiving via an interface a 3d vehicle model, determining a current position and a current direction of travel of said vehicle, and displaying the 3d vehicle model in the electronic map, wherein the 3d vehicle model is displayed at the current position in the map such that a front side or the vehicle is orientated based on the current direction of travel.

For a method having such features, advantageous effects as described with respect to the system above may be obtained.

In particular, it may be possible that the received 3d vehicle model is based on a current appearance of said vehicle. This means that the received 3d model relates to an appearance of the vehicle which is a graphical representation of the current appearance of the vehicle. The current appearance of the vehicle may be obtained from photographies. Then, these photographies may be used to calculate the 3d vehicle model. This has the advantage that a user of the navigation system may intuitively understand the meaning of the indication of the current position via the 3d vehicle model. If the object used to indicate the current position in an electronic map relates to the appearance of the vehicle itself, it may be more easy for a user to find out where the current position is located within the electronic map.

Moreover, the method according to the current aspect further may comprise obtaining multiple image data of the vehicle and processing the image data to obtain the 3d vehicle model.

The processing of the image data may comprise arranging the image data and defining a front side of the vehicle model.

For example, it may be possible to arrange 2d image data in the form of conventional photographies taken with a camera such that based on this arrangement computer-executable programs may calculate a 3d vehicle model. If additionally a user defines a front side of the vehicle model, the 3d vehicle model may be displayed in the electronic map such that the front side of the vehicle always is orientated in the direction of travel. By displaying of the 3d vehicle model in such a way, the user may intuitively perceive the arrangement of the 3d vehicle model because the 3d vehicle model is arranged in the electronic map according to the real orientation of the vehicle. In particular, if the current direction is changed, for example because the driver of the vehicle turns the vehicle, also the depiction of the three-dimensional vehicle model in the electronic map may be changed. In other words, the displayed 3d model may be turned three-dimensionally when the direction of travel is changed.

According to a further aspect, a computer program is provided which comprises computer-executable instructions which, when executed by a computer, perform the processing of the image data according to the aspect as outlined above.

### Brief Description of the Drawings

Embodiments of the invention will be described in further detail below with reference to the accompanying drawings. In these drawings
Fig. 1 is a schematic view of a vehicle navigation system,
Fig. 2 is a schematic illustration of an electronic map in a vehicle navigation system,
Fig. 3 is a flow chart indicating the displaying of a 3d vehicle model in an electronic map,
Fig. 4 is a schematic depiction of the creation of a 3d vehicle model from image data.

### Detailed Description

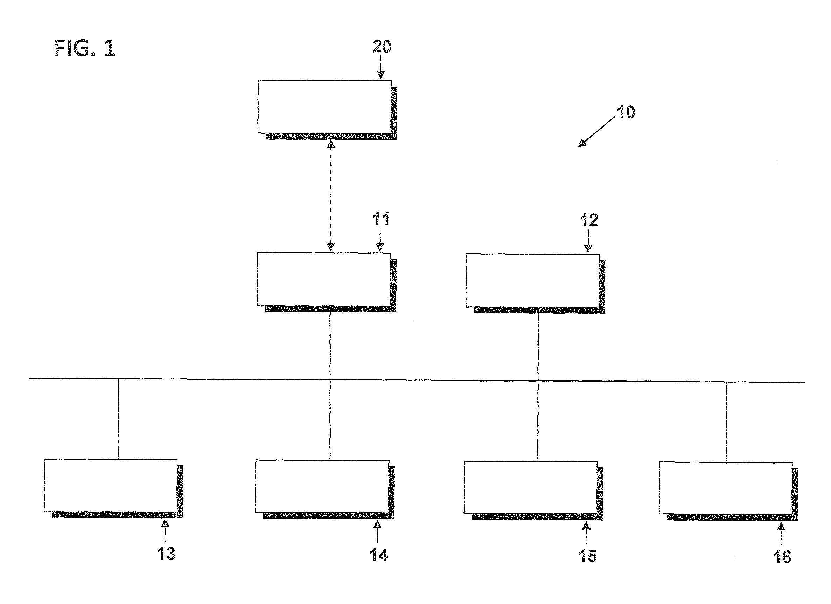

Fig. 1 is a schematic illustration of a vehicle navigation system 10. The vehicle navigation system 10 comprises a data interface 11, a display 12, a positioning unit 13, a map database 14, and a graphical processor 15. In particular, the data interface 11 is connected with a personal computer 20. Different data can be transferred via this connection between the personal computer 20 and the data interface 11 being part of the vehicle navigation system 10. For example, a 3d vehicle model may be transferred via this data connection.

It should be understood that it is also possible that the operations performed in the embodiment of Fig. 1 executed on the personal computer 20 are executed within the vehicle navigation system 10 by providing a respectively configured processor and certain means for interaction with a user.

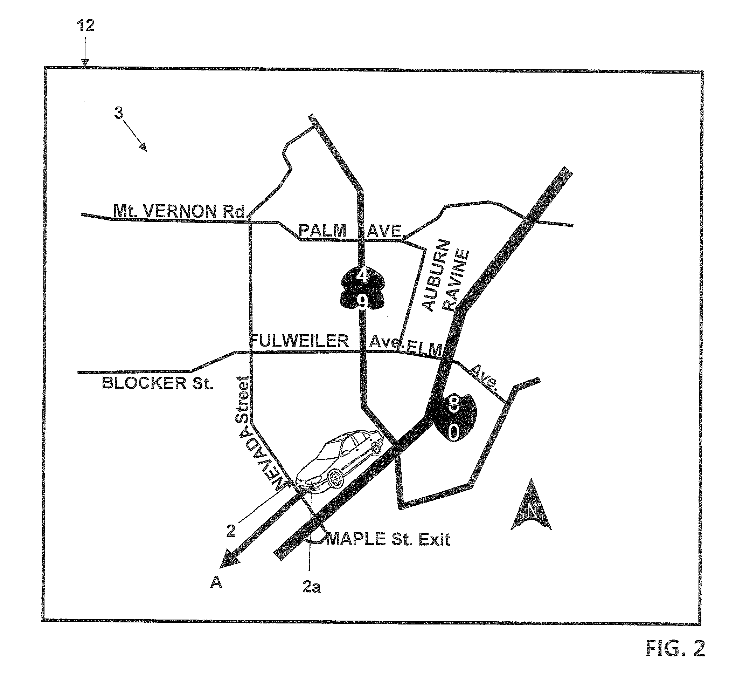

The graphical processor 15 is configured to calculate an electronic map based on at least data obtained from the map database 14. The map database 14 contains the raw data on geographical features, such as streets, cities, landmarks, etc. Then the graphical processor 15 calculates an electronic map based on this information. Such an electronic map is depicted on display 12 and is discussed below with respect to Fig. 2. The electronic map itself can be, for example, of 2d form or 3d form. If the electronic map is of 2d form, all features contained in the electronic map database 14 are projected onto a plane. Typically, a top view onto this plane containing the geographical information is calculated by the graphical processor 15. However, it is also possible to provide a 3d electronic map where for example an arbitrary viewing angle onto the plane containing geographic information is provided. In particular, 3d features such as topography of the geographic area depicted by the electronic map can be included. The viewing angle of such a 3d electronic map can be aligned with the direction of travel determined via the positioning unit 13 or it can be under an arbitrary arrangement with the current direction of travel. A user can specify the orientation of the electronic map with respect to the direction of travel or with respect to a particular geographic direction via a human interface device 16.

In particular, the graphical processor 15 is configured to contain an indication of the current position obtained from the positioning unit 13 in the electronic map which is displayed on the display 12. Such an indication is in the form of a 3d vehicle model obtained via the data interface 11. It is possible that the 3d vehicle model is received prior to the calculation of the electronic map and stored until used by the graphical processor 15. The user has the possibility of adapting the 3d vehicle model by providing an updated 3d vehicle model via interface 11 to the graphical processor 15.

In particular, the graphical processor 15 is in continuing connection with the positioning unit 13. Then, if the current position or the current direction of travel is determined via the positioning unit 13, for example in the form of a GPS, changes, the graphical processor 15 also adapts the electronic map accordingly. Then, also the 3d vehicle model is accordingly turned or rotated within the electronic map.

Furthermore, the positioning unit 13 is configured to determine the current direction of travel. This can be done, for example, by evaluating the geographical positions detected, e.g. via a GPS, over time and, from the derivative, determine a current direction of travel. It is also possible to determine the current direction of travel from a sensor monitoring the turning of the steering wheel and from the velocity of the vehicle. It is also possible to determine the current direction of travel from a matching of the digital map database with the current position determined in the positioning unit 13. If it is, e.g., determined that a certain street is currently used by the vehicle, the direction of travel can be evaluated from the orientation of this street as stored in the digital map database 14.

Fig. 1 shows only functional modules necessary for the understanding of the invention, functional modules can be incorporated in different combinations of hardware and/or software.

The vehicle navigation system 10 also comprises a human interface device 16. The human interface device 16 allows interaction with a user. For example the user can be the driver of the vehicle. Then the user can specify, amongst others, a viewing angle for usage for example in connection with a 3d electronic map. The viewing angle defined via human interface device 16 is forwarded to the graphical processor 15 and if the viewing angle is changed, also in the displayed electronic map the viewing angle onto the 3d vehicle model is changed accordingly. This ensures that the 3d vehicle model blends in and fits into the environment provided by the electronic map. This is the case if the viewing angle used for the depiction of the 3d vehicle model and the viewing angle used for the depiction of the electronic map are the same.

Fig. 2 illustrates an electronic map 3 displayed on a display 12. In particular, a 3d vehicle model 2 characterized by a driving direction A is depicted within the electronic map 3. The orientation of the 3d vehicle model 2 is aligned with the current direction of travel A such that a front side of the 3d vehicle model 2 is orientated, i.e. faces in the direction of travel A. When the current direction of travel changes, also the orientation of the 3d vehicle model 2 and the electronic map 3 is adapted accordingly. Also, the electronic map 3 can be displayed using different viewing angles with respect to the direction of travel A. For example, in Fig. 2 a viewing angle is used which has a component opposing the direction of travel. It is also possible to, e.g., choose the viewing angle such that it has no component opposing the current direction of travel A.

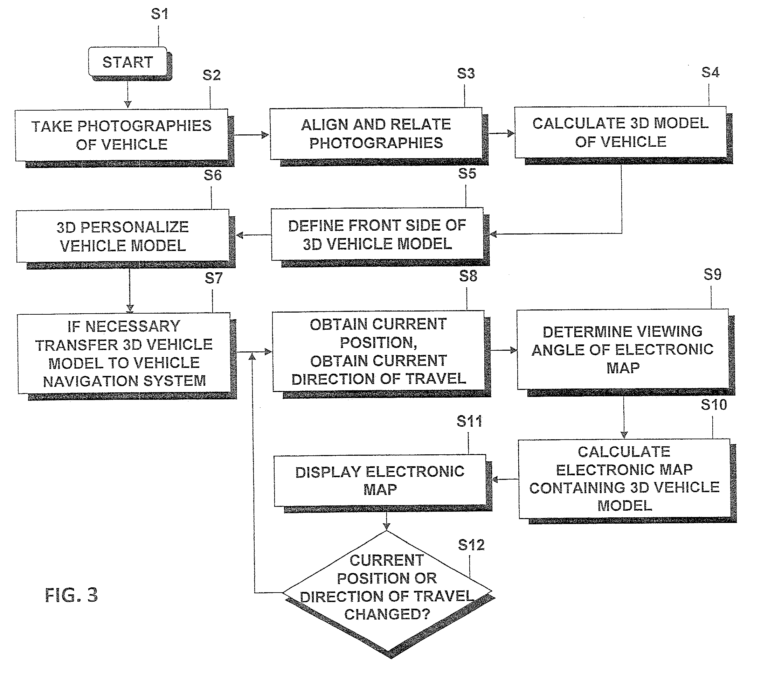

With respect to Fig. 3, a flowchart in further detail illustrates a possible embodiment allowing the displaying of a 3d vehicle model in an electronic map. The method starts with step S1. In step S2, photographies of the vehicle are taken. For example, those photographies are taken such that the front side, the rear side, the long sides, and the top of the vehicle are contained in the photographies. The photographies can be taken with a camera or a camera contained within a personal computer. A user of the vehicle may take the photographies or a manufacturer. Then, in step S3, the photographies are aligned and related with respect to each other. Step S3 can be performed on a personal computer, but, for example, it is also possible that step S3 is performed in a vehicle navigation system. Aligning and relating the photographies refers to specifying which photography corresponds to which viewing perspective. In particular, a photography or imgage data is specified, which relates or depicts the front side of the vehicle.

Then, in step S4, a 3d model of the vehicle is calculated. Typically, the calculation of the 3d vehicle model relies on the correct orientation in alignment of the different image data or photographies obtained from the previous steps S2 and S3. If sufficient image data is available, then it is possible to calculate a full 3d model of the vehicle. For example, step S4 may be executed on a personal computer or within a vehicle navigation system. In particular, it is possible that step S4 is performed automatically by some computer-executable program.

If not already occurred in step S3, it is possible to define a front side of the 3d model of the vehicle in step S5. For example, the definition of the front side of the 3d vehicle model may occur via selection of the respective polygons of a 3d vehicle model which relate to the front side of the real vehicle.

In step S6 it is possible to further personalize the 3d vehicle model. For example, the texturing, the color, the size, or other features can be specified. Such a personalization of the 3d vehicle model can occur using a personal computer or using the vehicle navigation system. The user can personalize the 3d vehicle model according to his needs.

Step S7, the transferring of the 3d vehicle model to the vehicle navigation system, is an optional step. For example it is possible that the steps S2 through S6 are performed on a personal computer. If this is the case, then it is necessary to perform step S7 where the 3d vehicle model is transferred to the vehicle navigation system. However, it is also possible that at least some of the steps S2 through S6 have been performed on the vehicle navigation system itself. Then step S7 is not necessary or necessary at an earlier stage of the method of Fig. 3, as the 3d vehicle model is already present on the vehicle navigation system.

Then in step S8 a current position and a current direction of travel is obtained. For example, the current position and the current direction of travel can be obtained from a positioning unit of the vehicle navigation system.

Next, in step S9, a viewing angle of the electronic map is determined. The viewing angle of the electronic map can be determined automatically from measured parameters such as the current velocity, the current direction of travel or the like. However, it is also possible that the viewing angle of the electronic map is obtained via some human interface device provided within the vehicle navigation system. For example, it is possible that the user specifies the viewing angle according to his needs.

Based on different information such as the current direction of travel, the current position and the viewing angle, in step S10 an electronic map containing the 3d vehicle model is calculated. Typically, such a calculation is performed by some graphical processor provided within a vehicle navigation system.

In step S11, the thus calculated electronic map is displayed on a display provided, for example, within the vehicle navigation system. It is also possible that the display used for displaying the electronic map is part of some other units provided within a vehicle but connected to the vehicle navigation system. Typically, in modern vehicles a centralized display is used for displaying information relating to different parts of the vehicle, but including the electronic map view.

Last, in step S12 it is checked whether the current position or the direction of travel has changed. If the current direction of travel or the current position has changed, then the method commences with performing steps S8 through S11. Accordingly, when the current direction of travel or the current position is changed, the depiction of the 3d vehicle model within the electronic map is adapted. For example, when the vehicle turns, also the 3d vehicle model in the electronic map view turns.

The method ends whenever no electronic map is displayed any more or no depiction of the 3d vehicle model is necessary.

It should be understood that steps S1-S6 can be executed separately and/or independently from steps S7-S12, e.g., at different points in time. In other words, steps S1-S12 do not necessarily have to be executed continuously in time.

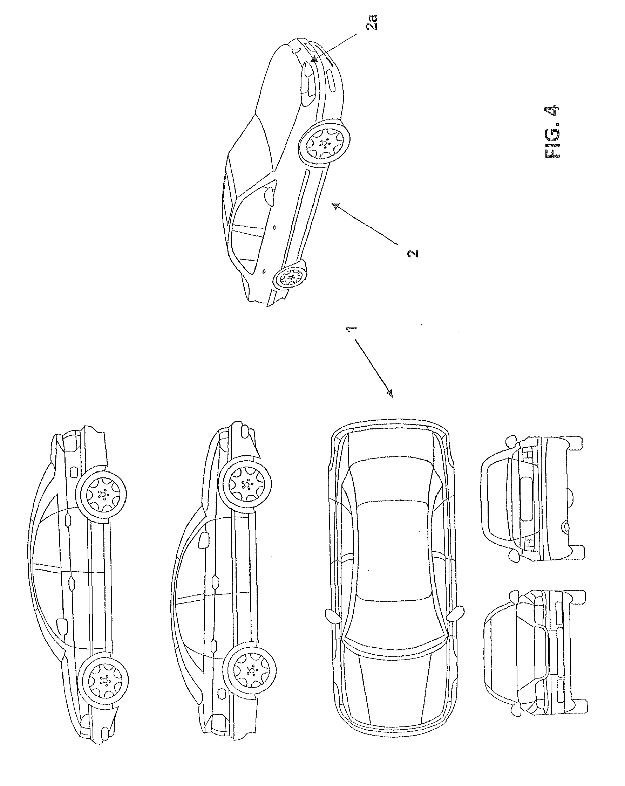

With respect to Fig. 4, it is illustrated how based on different two-dimensional image data a 3d vehicle model can be obtained. The 2d image data 1 is present in the form of five images relating to front view, two side views, rear view and top view of the vehicle. The images can be available in the form of photographies. From such data it is possible to fully reconstruct a 3d vehicle model 2. In particular, the 3d vehicle model 2 has a front side 2A. For example, the front side 2A is defined by the user via some human interface by the selection of polygons in the 3d vehicle model 2 or via specification of the respective image data 1. The front side 2A corresponds to the side of the vehicle which is orientated in front of the vehicle during normal driving.

## Claims

1. A navigation system in a vehicle, comprising:
- an interface (11), which is configured to receive a three-dimensional(3d) vehicle model (2),
- a positioning unit (13), which is configured to determine a current position and a current direction of travel (A) of said vehicle,
- a graphical processor (15), which is configured to calculate an electronic map (3) containing the 3d vehicle model (2), wherein the 3d vehicle model (2) is positioned in the electronic map (3) at the current position such that a front side (2a) of the 3d vehicle model (2) is orientated based on the current direction of travel (A), and
- a display (12), which is configured to display the electronic map (3) containing the 3d vehicle model (2).

2. The navigation system according to claim 1, wherein, if the electronic map (3) is displayed in a two-dimensional(2d) view, the graphical processor is configured to calculate the electronic map (3) such that the 3d vehicle model is displayed on the display in bird's eye view.

3. The navigation system according to claim 1, wherein, if the electronic map (3) is displayed in a 2d view, the graphical processor is configured to calculate the electronic map (3) such that the 3d vehicle model is displayed on the display in a side view.

4. The navigation system according to any of the preceding claims, wherein, if the electronic map (3) is displayed in a 3d view, the graphical processor is configured to calculate the electronic map (3) such that the 3d vehicle model (2) and the electronic map (3) are displayed on the display using the same viewing angle.

5. The navigation system according to any of the preceding claims, wherein the interface is configured to receive the 3d vehicle model (2) from a user input based on personalized image data.

6. The navigation system according to claim 5, wherein the personalized image data comprises 2d photographies of the vehicle taken from different viewing perspectives selected from the group comprising: front view, side view, rear view, top view.

7. The navigation system according to any of the preceding claims, wherein the graphical processor is configured to calculate the electronic map (3) containing the 3d vehicle model (2) such that the front side (2a) of the vehicle model (2) is orientated in the current direction of travel.

8. A method for displaying a 3d vehicle model (2) in an electronic map (3) in a vehicle, the method comprising:
- receiving, via an interface, a 3d vehicle model (2),
- determining a current position and a current direction of travel (A) of said vehicle,
- displaying the 3d vehicle model (2) in the electronic map, wherein the 3d vehicle model (2) is displayed at the current position in the electronic map such that a front side (2a) of the vehicle is orientated based on the current direction of travel (A).

9. The navigation system according to claim 8, wherein the received 3d vehicle model (2) is a model of said vehicle.

10. The navigation system according to any of claims 8 or 9, wherein the received 3d vehicle model (2) is based on a current appearance of said vehicle.

11. The method according to any of claims 8-10, wherein the 3d vehicle model (2) is displayed at the current position in the map such that the front side (2a) of the vehicle is orientated in the current direction of travel (A).

12. The method according to any of claims 8 - 11, further comprising:
- obtaining multiple image data of the vehicle,
- processing the image data to obtain the 3d vehicle model (2).

13. The method according to claim 12, wherein
processing the image data comprises
- arranging the image data,
- defining a front side of the vehicle model.

14. The method according to any of claims 12 or 13, wherein the multiple image data comprises 2d photographies of said vehicle taken from different viewing perspectives selected from the group comprising: front view, side view, rear view, top view.

15. A computer program which comprises computer-executable instructions which, when executed by a computer, performs the processing of the image data according to any of claims 8-14.
